# EUROPEAN PATENT APPLICATION

(11) **EP 4 789 825 A2**
(43) Date of publication of application: **12.08.2026**
(21) Application number: 26179735.1
(22) Date of filing: 19.05.2026
(51) Int. Cl.: B25J 17/00, B25J 19/02

(54) **LAYOUT STRUCTURE FOR SENSOR, HEAD, AND NECK**

(30) Priority: 07.11.2025 CN 202522363769 U
(71) Applicant: Shanghai TARS Robotics Co., Ltd., Shanghai 200233 (CN)
(72) Inventor: WANG, Tianyi, Shanghai 200233 (CN); ZHU, Xing, Shanghai 200233 (CN)
(74) Representative: JD&P Patent Attorneys Joanna Dargiewicz & Partners

(57) **Abstract**

A layout structure for a sensor, a head, and a neck of a robot, includes a head, a neck, and a sensor. The neck is connected between the head and a torso. A lower portion of the neck is inclined forward such that a forward-open layout space is formed between a front side of the neck and a chin of the head. The sensor is arranged in the forward-open layout space. In a horizontal plane, the neck blocks less than 90° of a circumferential field of view of the sensor, which reduces the obstruction of the neck structure to the sensor and thus significantly enhances the environmental perception capability of a robot.

## Description

### TECHNICAL FIELD

The present disclosure relates to the technical field of robots, and in particular to a layout structure for a sensor, a head, and a neck.

### BACKGROUND

With the advancement of artificial intelligence and robotics technology, humanoid robots have been widely adopted in various scenarios such as reception, guided tours, and educational assistance. To achieve functions such as autonomous mobility, environmental perception, and interaction, integrating a high-performance sensor (e.g. a laser radar) into a head of a robot has become one of the key technologies. The core function of a laser radar in a robot lies in the accurate detection of regions directly in front and at two sides of the laser radar, which is the foundation for the robot to achieve safe navigation and obstacle avoidance.

In the prior art, a common solution is to embed a sensor in a neck of a robot. For instance, the Chinese patent CN222755459U discloses a head-neck structure of a humanoid robot. In this head-neck structure, a laser radar is arranged in an internal space of a neck that is enclosed by a neck front bracket and a neck rear bracket.

Although this solution considers avoiding obstruction by a head structure, the neck front bracket located directly in front of the laser radar severely blocks the most critical forward sensing field of view. This problem significantly undermines the core functionality of the laser radar and poses a serious threat to the safety of the humanoid robot during forward movement and obstacle avoidance.

### SUMMARY OF PRESENT INVENTION

An objective of the present disclosure is to provide a layout structure for a sensor, a head, and a neck in view of the deficiencies in the prior art. This layout structure can reduce the obstruction of a neck structure to the sensor (particularly regions directly in front and at two sides of the sensor) to significantly enhance the environmental perception capability of a robot.

To achieve the above objective, the present disclosure provides the following technical solutions:

A layout structure for a sensor, a head, and a neck of a robot is provided, including:
a head;
a neck, where the neck is connected between the head and a torso, and a lower portion of the neck is inclined forward such that a forward-open layout space is formed between a front side of the neck and a chin of the head; and
a sensor, where the sensor is arranged in the forward-open layout space,
where in a horizontal plane, the neck blocks less than 90° of a circumferential field of view of the sensor.

As a preferred embodiment, the neck includes:
at least one neck side plate, where the neck side plate includes a neck vertical plate and a neck inclined plate; the neck vertical plate is connected between the head and the neck inclined plate and the neck inclined plate is connected between the neck vertical plate and the torso; and
a junction between the neck inclined plate and the torso is located in front of a junction between the neck inclined plate and the neck vertical plate.

As a preferred embodiment, two neck side plates are provided, and the two neck side plates are spaced apart.

As a preferred embodiment, the two neck side plates are arranged symmetrically about an axis of the sensor.

As a preferred embodiment, the neck further includes:
a neck upper plate, where two sides of the neck upper plate are respectively connected to upper ends of the two neck side plates, the neck upper plate is connected to the head, and the neck upper plate is located above the sensor; and
a neck lower plate, where two sides of the neck lower plate are respectively connected to lower ends of the two neck side plates, the neck lower plate is connected to the torso, and the neck lower plate is located below the sensor.

As a preferred embodiment, the layout structure for a sensor, a head, and a neck further includes:
a first motor, where a housing of the first motor is fixed to the torso, an output shaft of the first motor is connected to the neck lower plate, and the first motor is configured to drive the neck and the head to rotate about an axis of the first motor.

As a preferred embodiment, the layout structure for a sensor, a head, and a neck further includes:
a second motor, where the second motor is embedded in the head, a housing of the second motor is connected to the neck upper plate, an output shaft of the second motor is connected to the head, and the second motor is configured to drive the head to rotate about an axis of the second motor; and
the axis of the second motor is perpendicular to the axis of the first motor.

As a preferred embodiment, the sensor is fixed to the chin of the head.

As a preferred embodiment, the sensor includes:
a base, where the base is embedded in the head, and the base overlaps with the neck vertical plate in a vertical direction; and
an optical window, where the optical window is arranged below the base and exposed outward, the optical window is spherical, and the optical window is at least a partially located above an upper end of the neck inclined plate.

As a preferred embodiment, the sensor includes a laser radar or a camera.

Compared with the prior art, the technical solutions of the present disclosure offer the following advantages:
In the present disclosure, the sensor is arranged at the front side of the neck, rather than being embedded in the neck as in the prior art. Thus, the neck is prevented from blocking the critical sensing region directly in front of the sensor.

Moreover, in the horizontal plane, the neck blocks less than 90° of the circumferential field of view of the sensor. This design reduces sensing blind spots at two sides of the sensor and significantly enhances the navigation and obstacle avoidance safety of a robot.

### BRIEF DESCRIPTION OF THE DRAWINGS

FIG. 1 is a schematic diagram showing an assembly of a layout structure for a sensor, a head, and a neck with a torso according to one embodiment of the present disclosure;
FIG. 2 is a schematic structural diagram showing the layout structure for the sensor, the head, and the neck according to one embodiment of the present disclosure;
FIG. 3 is a front view of the layout structure for the sensor, the head, and the neck according to one embodiment of the present disclosure;
FIG. 4 is a cross-sectional view along A-A shown in FIG. 3;
FIG. 5 is a cross-sectional view along B-B shown in FIG. 3;
FIG. 6 is a schematic diagram of an assembly of the head bracket and the neck according to one embodiment of the present disclosure; and
FIG. 7 is a schematic structural diagram of the neck according to one embodiment of the present disclosure.

Reference numerals: 100-head, 110-head bracket, 111- first head side plate, 112-second head side plate, 113-head bottom plate, 114-head top plate, 120-head housing, 121-opening, 130-motor bracket, 131-first motor side plate, 132-second motor side plate, 133-motor enclosure plate, 134-motor inclined plate, 135-motor bottom plate, 200-neck, 200a-layout space, 210-neck side plate, 211-neck vertical plate, 212-neck inclined plate, 220-neck upper plate, 230-neck lower plate, 300-torso, 400-sensor, 410-base, 420-optical window, 510-first motor, and 520-second motor.

### DETAILED DESCRIPTION OF THE EMBODIMENTS

The following description is provided to disclose the present disclosure such that those skilled in the art can implement the present disclosure. The following preferred embodiments are merely provided as examples, and those skilled in the art may conceive of other obvious variations. The basic principles of the present disclosure defined in the following description may be applied to other embodiments, variations, improvements, equivalents, and other technical solutions that do not depart from the spirit and scope of the present disclosure.

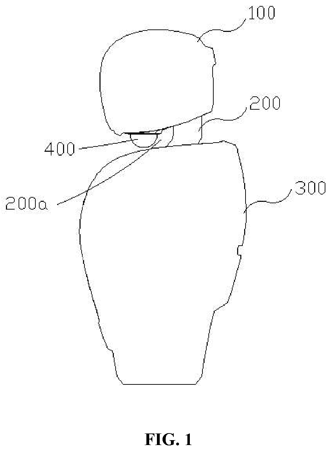

As shown in FIG. 1, an embodiment of the present disclosure provides a layout structure for a sensor, a head, and a neck, including: a head 100, a neck 200, and a sensor 400.

The neck 200 is connected between the head 100 and a torso 300. A lower portion of the neck 200 is inclined forward such that a forward-open layout space 200a is formed between a front side of the neck 200 and a chin of the head 100.

The sensor 400 is arranged in the forward-open layout space 200a.

In a horizontal plane, the neck 200 blocks less than 90° of a circumferential field of view of the sensor 400.

An upper end of the neck 200 is connected to a rear side of the head 100. A lower end of the neck extends toward a central portion of the torso 300 to enable the lower portion of the neck 200 to be inclined forward. In this way, the forward-open layout space 200a is defined between a front side surface of the neck 200 and a lower region of the head 100. The term "forward-open" means that, within a horizontal forward field of view of the sensor 400, the forward-open layout space 200a is free of any structural obstruction in a forward direction.

The sensor 400 is arranged in the forward-open layout space 200a. In the present disclosure, the sensor 400 is arranged at the front side of the neck 200, rather than being embedded in the neck as in the prior art. Thus, the neck 200 is prevented from blocking the critical sensing region directly in front of the sensor 400.

Moreover, in the horizontal plane, the neck 200 blocks less than 90° of the circumferential field of view of the sensor 400. This design ensures that the sensor 400 possesses an exceptionally wide effective sensing range of at least 270°, and reduces sensing blind spots at two sides of the sensor. Consequently, the navigation and obstacle avoidance safety of a robot can be significantly enhanced.

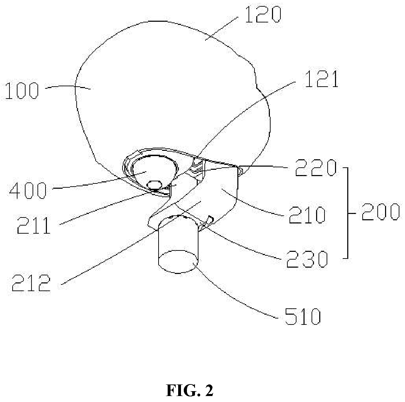

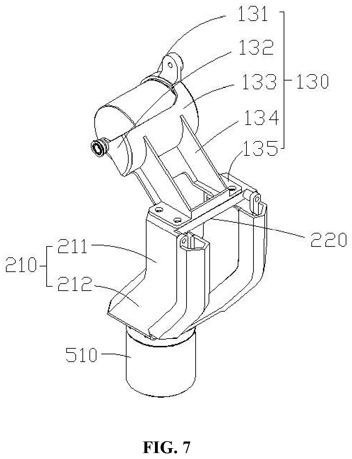

As shown in FIG. 2 and FIG. 7, the neck 200 includes at least one neck side plate 210.

The neck side plate 210 includes a neck vertical plate 211 and a neck inclined plate 212. The neck vertical plate 211 is connected between the head 100 and the neck inclined plate 212. The neck inclined plate 212 is connected between the neck vertical plate 211 and the torso 300.

An upper end of the neck vertical plate 211 is connected to a rear side of the head 100. A front side of the head 100 serves as a face of a robot. A lower end of the neck vertical plate 211 is connected to an upper end of the neck inclined plate 212. A lower end of the neck inclined plate 212 is connected to a central portion of the torso 300. The central portion refers to a middle region of the torso 300 in a direction from a front side to a rear side.

It should be noted that connecting the lower end of the neck inclined plate 212 to the central portion of the torso 300 is based on considerations for the overall structural stability. A junction between the neck inclined plate 212 and the torso 300 is close to the projection of a center of gravity of the torso 300. This design can significantly shorten a lever arm of a neck support structure to reduce an overturning moment generated when the head 100 moves or is subjected to an external force. Thus, the stability can be effectively enhanced to prevent severe shaking or tipping.

The neck vertical plate 211 and the neck inclined plate 212 may be integrally formed. The neck side plate 210 may be made of a rigid material such as a metal or a high-strength engineering plastic, including aluminum alloy.

A junction between the neck inclined plate 212 and the torso 300 is located in front of a junction between the neck inclined plate 212 and the neck vertical plate 211. As a result, the neck inclined plate 212 is in a forward-inclined posture. The neck inclined plate and the neck vertical plate 211 together constitute an L-shaped neck 200. A required layout space 200a is formed between the L-shaped neck and the chin of the head 100.

Preferably, an included angle between the neck inclined plate 212 and the neck vertical plate 211 is 120° to 150° to allow the optimal balance between ensuring structural stability and maximizing the layout space.

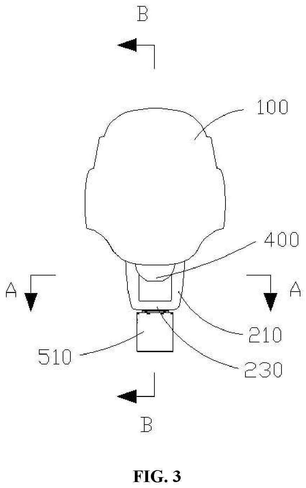

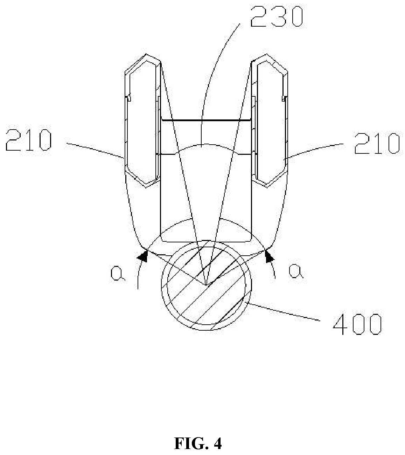

As shown in FIG. 3 and FIG. 4, a thickness of the neck side plate 210 not only relates to the overall mechanical strength of the neck 200 but also determines the angle of obstruction to the circumferential field of view of the sensor 400. Therefore, in this embodiment, two neck side plates 210 are provided and spaced apart. A thickness of each neck side plate 210 is designed to be a minimum value that ensures structural safety under rated load. The separation between the two neck side plates 210 creates a gap, which provides the sensor 400 with a rearward field of view.

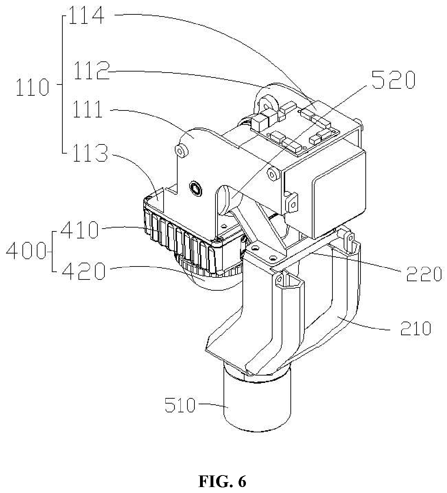

As shown in FIG. 6, a distance from a front side to a rear side of the neck side plate 210 is significantly greater than the thickness of the neck side plate 210, guaranteeing a sufficient flexural strength for the neck 200. Moreover, the two neck side plates 210 are located at a rear side of the sensor 400 and are symmetrically arranged about an axis of the sensor 400. In this way, the two neck side plates 210 can be prevented from blocking left and right sides of the sensor 400.

As shown in FIG. 4, the angle of obstruction (denoted as α) caused by each neck side plate 210 to the circumferential field of view of the sensor 400 is designed to be less than 45°. This design can ensure that the total obstruction angle caused by the two neck side plates 210 is less than 90° to provide a structural guarantee for an effective field of view of at least 270° of the sensor 400.

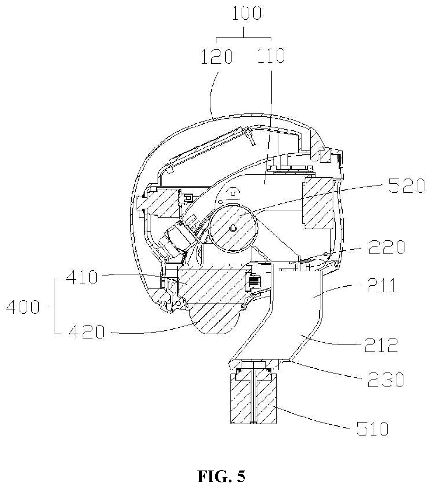

As shown in FIG. 5 to FIG. 7, the neck 200 further includes a neck upper plate 220 and a neck lower plate 230.

Two sides of the neck upper plate 220 are respectively connected to upper ends of the two neck side plates 210. The neck upper plate 220 is connected to the head 100. The neck upper plate 220 is located above the sensor 400.

Two sides of the neck lower plate 230 are respectively connected to lower ends of the two neck side plates 210. The neck lower plate 230 is connected to the torso 300. The neck lower plate 230 is located below the sensor 400.

The neck upper plate 220, the neck lower plate 230, and the two neck side plates 210 together constitute a complete frame-style neck 200 to provide stable support for the head 100.

As shown in FIG. 1 and FIG. 2, the layout structure for a sensor, a head, and a neck further includes a first motor 510.

A housing of the first motor 510 is fixed to the torso 300. An output shaft of the first motor 510 is connected to the neck lower plate 230. The first motor 510 is configured to drive the neck 200 and the head 100 to rotate about an axis of the first motor 510.

The first motor 510 is embedded in the torso 300 and vertically oriented. In this configuration, the first motor 510 drives the neck 200 and the head 100 as a whole to rotate horizontally about a vertical axis, namely, a left-right rotation of the head 100. The sensor 400 also undergoes a horizontal rotation along with the head 100.

As shown in FIG. 5 and FIG. 6, the head 100 includes a head bracket 110 and a head housing 120. The head housing 120 encloses the head bracket 110. An opening 121 is formed at a bottom of the head housing 120. An upper end of the neck 200 passes through the opening 121 and is connected to the head bracket 110.

The sensor 400 can be fixed to the chin of the head 100. That is, the sensor 400 can also be accommodated within the opening 121 and fixed to the head bracket 110.

As shown in FIG. 5 and FIG. 6, with a laser radar as an example, the sensor 400 includes a base 410 and an optical window 420.

The base 410 is embedded in the head 100 and connected to the head bracket 110. Components such as a laser emitter, a receiver, and a scanning module are accommodated within the base 410.

The optical window 420 is spherical. The optical window 420 is arranged below the base 410 and exposed outward. The optical window 420 provides an optical channel for the transmission of a laser beam and the return of a signal.

The base 410 is enclosed by the head housing 120. The optical window 420 is exposed outside the head housing 120 and directly faces an external environment. The sensor 400 may also be a camera.

As shown in FIG. 5, the base 410 overlaps with the neck vertical plate 211 in a vertical direction. The optical window 420 is at least partially located above the upper end of the neck inclined plate 212. This design prevents the structural interference of the optical window 420 with the neck inclined plate 212 and the torso 300 due to a too-low position of the optical window.

As shown in FIG. 5 to FIG. 7, the layout structure for a sensor, a head, and a neck further includes a second motor 520.

The second motor 520 is embedded in the head 100. A housing of the second motor 520 is connected to the neck upper plate 220. An output shaft of the second motor 520 is connected to the head 100. The second motor 520 is configured to drive the head 100 to rotate about an axis of the second motor 520.

The axis of the second motor 520 is perpendicular to the axis of the first motor 510.

The output shaft of the second motor 520 is connected to the head bracket 110 of the head 100. The second motor drives the head bracket 110 and the head housing 120 to rotate about the axis of the second motor 520, thereby enabling up-and-down tilting of the head 100. The sensor 400 tilts up and down along with the head 100.

As shown in FIG. 7, the second motor 520 is arranged on the neck upper plate 220 through a motor bracket 130. The motor bracket 130 includes:
a first motor side plate 131, a second motor side plate 132, a motor enclosure plate 133, a motor inclined plate 134, and a motor bottom plate 135.

The second motor 520 is retained between the first motor side plate 131 and the second motor side plate 132. The housing of the second motor 520 is connected to the second motor side plate 132. An output shaft of the second motor 520 penetrates through the second motor side plate 132.

The motor enclosure plate 133 is arranged around a periphery of the second motor 520 and connected between the first motor side plate 131 and the second motor side plate 132.

The motor inclined plate 134 is connected between the motor enclosure plate 133 and the motor bottom plate 135.

The motor bottom plate 135 is fixed to the neck upper plate 220.

As shown in FIG. 6, the head bracket 110 includes: a first head side plate 111, a second head side plate 112, a head bottom plate 113, and a head top plate 114.

The head bottom plate 113 is connected between the first head side plate 111 and the second head side plate 112.

The head top plate 114 is connected between the first head side plate 111 and the second head side plate 112.

A lower surface of the head bottom plate 113 is fixedly provided with the sensor 400. The first head side plate 111 is located at an outer side of the first motor side plate 131. A circular boss is provided on an outer side of the first motor side plate 131. A circular hole is formed through the first head side plate 111. The circular boss engages with the circular hole to enable a rotational connection. The second head side plate 112 is located at an outer side of the second motor side plate 132. The second head side plate 112 is connected to the output shaft of the second motor 520. In this configuration, the second motor 520 drives the head bracket 110, the head housing 120, and the sensor 400 to rotate.

It should be noted that the circular boss is coaxially arranged with the second motor 520 to ensure a smooth rotation of the head bracket 110.

In the present disclosure, unless specifically limited, the term "connection" or "fixation" for various components can be achieved by conventional technical means in the art, such as bolt connection, screw connection, welding, rivet connection, or snap-fit connection, which should not be construed as a limitation to the present disclosure.

In summary, the forward-open layout space 200a formed below the head 100 and at the front side of the neck 200 and the obstruction angle of less than 90° of the neck 200 reduce the obstruction of the neck 200 to horizontal forward and lateral fields of view of the sensor 400. The sensor 400 can rotate along with the first motor 510 and the second motor 520, which enables a broad field of view.

The embodiments described above are merely intended to illustrate the technical concept and features of the present disclosure and to enable those skilled in the art to understand and implement the content of the present disclosure. The scope of the present disclosure shall not be limited solely by these embodiments. That is, all equivalent modifications or variations made based on the spirit disclosed by the present disclosure shall still fall within the scope of the present disclosure.

## Claims

1. A layout structure for a sensor, a head, and a neck of a robot, comprising:
a head (100);
a neck (200), wherein the neck (200) is connected between the head (100) and a torso (300), and
a lower portion of the neck (200) is inclined forward such that a forward-open layout space (200a) is formed between a front side of the neck (200) and a chin of the head (100); and
a sensor (400), wherein the sensor (400) is arranged in the forward-open layout space (200a),
wherein in a horizontal plane, the neck (200) blocks less than 90° of a circumferential field of view of the sensor (400).

2. The layout structure according to claim 1, wherein the neck (200) comprises:
at least one neck side plate (210), wherein the at least one neck side plate (210) comprises a neck vertical plate (211) and a neck inclined plate (212); the neck vertical plate (211) is connected between the head (100) and the neck inclined plate (212) and the neck inclined plate (212) is connected between the neck vertical plate (211) and the torso (300); and
a junction between the neck inclined plate (212) and the torso (300) and located in front of a junction between the neck inclined plate (212) and the neck vertical plate (211).

3. The layout structure according to claim 2, wherein two neck side plates (210) are provided, and the two neck side plates (210) are spaced apart.

4. The layout structure according to claim 3, wherein the two neck side plates (210) are arranged symmetrically about an axis of the sensor (400).

5. The layout structure according to claim 3, wherein the neck (200) further comprises:
a neck upper plate (220), wherein two sides of the neck upper plate (220) are respectively connected to upper ends of the two neck side plates (210), the neck upper plate (220) is connected to the head (100), and the neck upper plate (220) is located above the sensor (400); and
a neck lower plate (230), wherein two sides of the neck lower plate (230) are respectively connected to lower ends of the two neck side plates (210), the neck lower plate (230) is connected to the torso (300), and the neck lower plate (230) is located below the sensor (400).

6. The layout structure according to claim 5, further comprising:
a first motor (510), wherein a housing of the first motor (510) is fixed to the torso (300), an output shaft of the first motor (510) is connected to the neck lower plate (230), and the first motor (510) is configured to drive the neck (200) and the head (100) to rotate about an axis of the first motor (510).

7. The layout structure according to claim 6, further comprising:
a second motor (520), wherein the second motor (520) is embedded in the head (100), a housing of the second motor (520) is connected to the neck upper plate (220), an output shaft of the second motor (520) is connected to the head (100), and the second motor (520) is configured to drive the head (100) to rotate about an axis of the second motor (520); and
the axis of the second motor (520) is perpendicular to the axis of the first motor (510).

8. The layout structure according to claim 1, wherein the sensor (400) is fixed to the chin of the head (100).

9. The layout structure according to claim 2, wherein the sensor (400) comprises:
a base (410), wherein the base (410) is embedded in the head (100), and the base (410) overlaps with the neck vertical plate (211) in a vertical direction; and
an optical window (420), wherein the optical window (420) is arranged below the base (410) and exposed outward, the optical window (420) is spherical, and the optical window (420) is at least partially located above an upper end of the neck inclined plate (212).

10. The layout structure according to claim 1, wherein the sensor (400) comprises a laser radar or a camera.
